# EUROPEAN PATENT APPLICATION

(11) **EP 2 299 661 A2**
(43) Date of publication of application: **23.03.2011**
(21) Application number: 09172078.9
(22) Date of filing: 02.10.2009
(51) Int. Cl.: H04M 1/02

(54) **Electronic device for accommodating an earphone**

(30) Priority: 22.09.2009 TW 98131996
(71) Applicant: Giga-Byte Technology Co., Ltd., Taipei-Hsien 231 (TW)
(72) Inventor: Ma, Mou-Ming, Hsin Tien, Taipei County 231 (TW); Liu, Yi-Yuan, Hsin Tien, Taipei County 231 (TW); Kuo, Hsiang-Yun, Hsin Tien, Taipei County 231 (TW)
(74) Representative: Schwerbrock, Florian

(57) **Abstract**

An electronic device (100) including a body (110) and an earphone (120) is provided. One end (112) of the body (110) has an earplug-accommodating opening (114) and a power-supplying terminal (116). The earphone (120) has an earplug (122) and a power-charging terminal (124). The earplug (122) is accommodated in the earplug-accommodating opening (114), and the power-charging terminal (124) is electrically connected to the power-supplying terminal (116).

## Description

### CROSS-REFERENCE TO RELATED APPLICATION

### BACKGROUND OF THE INVENTION

### 1. Field of the Invention

The present invention relates to an electronic device. More particularly, the present invention relates to an electronic device which is convenient for using.

### 2. Description of Related Art

With development of technology, more and more convenient equipments are invented. Portable electronic devices such as mobile phones, small notebook computers and MP3 players are invented and widespread, people can use the mobile phone to deal with various affairs or enjoy music via the MP3 player while marching.

Taking the mobile phone as an example, when a user uses the mobile phone to contact a person, the user generally holds the mobile phone by his/her hand, so that an earphone and a voice receiver can be located near his/her ear and mouth for the user to clearly hear the voice from a counterpart and send his/her own voice to another counterpart. However, the user still has to use his/her hand to hold the mobile phone, and if the user is driving a car or both hands of the user are not available, it is inconvenient for the user to use the mobile phone.

Presently, wireless earphones (such as bluetooth earphones) are widely used for receiving audio information. Since the bluetooth earphone is communicated with the mobile phone through a wireless approach, it is unnecessary to connect a transmission line between the mobile phone and the bluetooth earphone, and the bluetooth earphone can be directly worn on the ear of the user. Therefore, it is unnecessary for the user to hold the mobile phone when the bluetooth earphone is utilized.

Since the bluetooth earphone has advantages of small size and light weight, when the bluetooth earphone is not used, the user probably puts it in a carry bag or other places. However, when the user wants to use the bluetooth earphone, the user has to rummage it from the carry bag, which can be inconvenient for using. Moreover, when the user fetches other stuffs from the carry bag, the bluetooth earphone can be carelessly taken out at the same time, so that the bluetooth earphone can probably fall out of the carry bag and can be lost, or the bluetooth earphone can be lost in somewhere due to a careless placement. Moreover, since a size of the bluetooth earphone is very small, a battery power thereof is probably inadequate, and replacing of the battery is difficult. Therefore, using of the bluetooth earphone has the above inconveniences.

### SUMMARY OF THE INVENTION

The present invention is directed to an electronic device, which is convenient for using.

The present invention provides an electronic device including a body and an earphone. One end of the body has an earplug-accommodating opening and a power-supplying terminal. The earphone has an earplug and a power-charging terminal. The earplug is accommodated in the earplug-accommodating opening, and the power-charging terminal is electrically connected to the power-supplying terminal.

In an embodiment of the present invention, the end of the body has a first fixing structure, and the first fixing structure is used to limit a rotation or a movement of the earphone relative to the body.

In an embodiment of the present invention, the first fixing structure is a fixing slot, and the earphone is leaned against the fixing slot.

In an embodiment of the present invention, the earphone has a second fixing structure. Shapes of the first fixing structure and the second fixing structure are complementary, so that the first fixing structure and the second fixing structure are mutually fit. Moreover, the first fixing structure is a pin, and the second fixing structure is a metal sheet, wherein the pin is the power-supplying terminal, and the metal sheet is the power-charging terminal.

According to the electronic device of the present invention, the earphone and the body can be assembled together when the earphone is not used, so as to avoid losing of the earphone. Moreover, the earphone can be charged by a power of the body, so that replacing a battery of the earphone is unnecessary. Therefore, the electronic device is convenient for using.

In order to make the aforementioned and other features and advantages of the present invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram illustrating an electronic device according to an embodiment of the present invention.

FIG. 2 is a schematic diagram illustrating an electronic device according to another embodiment of the present invention.

FIG. 3 is a schematic diagram illustrating an electronic device according to still another embodiment of the present invention.

### DESCRIPTION OF THE EMBODIMENTS

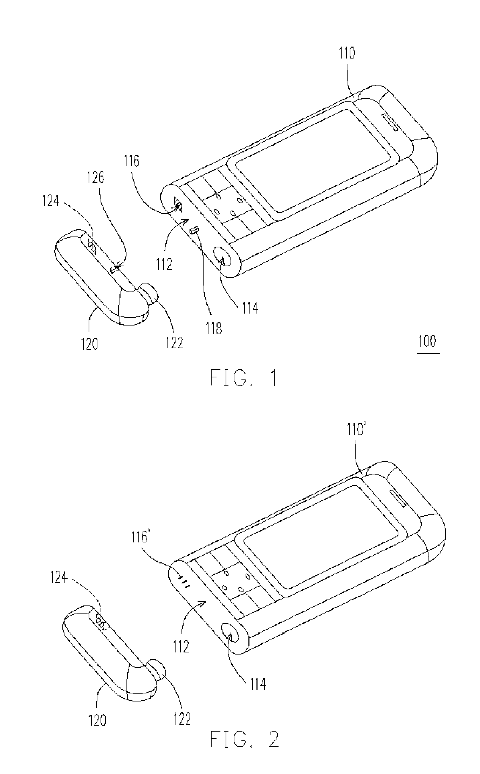

FIG. 1 is a schematic diagram illustrating an electronic device according to an embodiment of the present invention. Referring to FIG. 1, the electronic device 100 includes a body 110 and an earphone 120. The body 110 is, for example, a mobile phone, a small notebook computer or a MP3 player, etc., and the earphone 120 is, for example, a wireless earphone, such as a bluetooth earphone, etc. without a physical transmission line. One end 112 of the body 110 has an earplug-accommodating opening 114 and a power-supplying terminal 116. The earphone 120 has an earplug 122 and a power-charging terminal 124. The earplug 122 is accommodated in the earplug-accommodating opening 114, and the power-charging terminal 124 is electrically connected to the power-supplying terminal 116. The earphone 120 can be assembled to the body 110 by accommodating the earplug 122 in the earplug-accommodating opening 114, so as to avoid a situation that the earphone 120 cannot be found due to a careless placement of the earphone 120. Moreover, the earphone 120 can also be charged by a power of the body 110.

In the present embodiment, the end 112 further has a first fixing structure 118, and the earphone 120 has a second fixing structure 126, wherein shapes of the first fixing structure 118 and the second fixing structure 126 are complementary, so that the first fixing structure 118 and the second fixing structure 126 can be mutually fit. For example, the first fixing structure 118 can be a convex column, and the second fixing structure 126 can be a concave notch.

FIG. 2 is a schematic diagram illustrating an electronic device according to another embodiment of the present invention. Referring to FIG. 2, the power-supplying terminal 116' and the power-charging terminal 124' can be respectively a pin or a metal sheet. For example, the power-supplying terminal 116' can be the pin, and the power-charging terminal 124' can be the metal sheet sunk inside the earphone 120'. When the pin is inserted into a concave having the metal sheet to electrically connect the metal sheet, the pin and the metal sheet can be regarded as the first and the second fixing structures mutually fitted, by which not only a movement or a rotation of the earphone 120' relative to the body 110' can be limited, but also the earphone 120' can be charged due to an electrical connection between the pin and the metal sheet. It should be noticed that a reason that the power-charging terminal 124' is designed as the metal sheet sunk inside the earphone 120' rather than the pin protruding out of the earphone 120' is because of the user might be stung by the pin if the power-charging terminal 124' is designed as the pin protruding out of the earphone 120'.

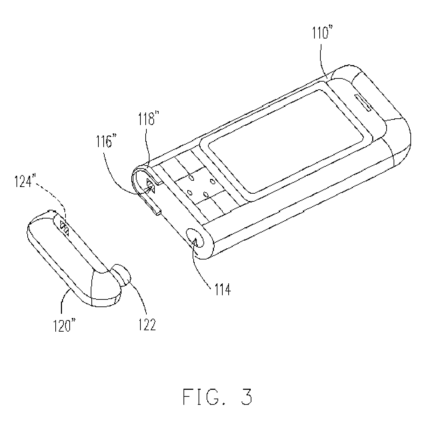

FIG. 3 is a schematic diagram illustrating an electronic device according to still another embodiment of the present invention. Referring to FIG. 3, the power-charging terminal 124" and the power-supplying terminal 116" can all be metal sheets. The first fixing structure 118" located at the end 112" of the body 110" is a fixing slot, and the earphone 120" is leaned against the fixing slot, so that the first fixing structure 118" can limit a rotation and a movement of the earphone 120" relative to the body 110". A size of the fixing slot is determined according to an actual requirement.

In the aforementioned embodiments, a color of the earphone can be the same to that of the body, so that the electronic device may have an integral appearance. Alternatively, the colors of the earphone and the body can be different, so that the user can conveniently identify the earphone and the body.

In summary, in the electronic device of the present invention, the earphone and the body can be assembled together, so as to avoid losing of the earphone due to careless placement of the earphone. Moreover, the body has the power-supplying terminal, and the earphone has the power-charging terminal, so that when the earphone and the body are assembled, the earphone can be charged by the power of the body. Therefore, the electronic device is convenient for using.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An electronic device, comprising:
a body, one end of the body having an earplug-accommodating opening and a power-supplying terminal; and
an earphone, having an earplug and a power-charging terminal, wherein the earplug is accommodated in the earplug-accommodating opening, and the power-charging terminal is electrically connected to the power-supplying terminal.

2. The electronic device as claimed in claim 1, wherein the end of the body has a first fixing structure, and the first fixing structure is used to limit a rotation or a movement of the earphone relative to the body.

3. The electronic device as claimed in claim 2, wherein the first fixing structure is a fixing slot, and the earphone is leaned against the fixing slot.

4. The electronic device as claimed in claim 2, wherein the earphone further has a second fixing structure, and shapes of the first fixing structure and the second fixing structure are complementary, so that the first fixing structure and the second fixing structure are mutually fit.

5. The electronic device as claimed in claim 4, wherein the first fixing structure is a pin, and the second fixing structure is a metal sheet.

6. The electronic device as claimed in claim 5, wherein the pin is the power-supplying terminal, and the metal sheet is the power-charging terminal.
